**Europäisches Patentamt**

**European Patent Office**

**Office européen des brevets**

(19)

(11) Veröffentlichungsnummer: **0 380 467 A2**

(12) # EUROPÄISCHE PATENTANMELDUNG

(21) Anmeldenummer: **90890011.1**

(22) Anmeldetag: **18.01.90**

(51) Int. Cl.5: **C22B 7/02**

(30) Priorität: **26.01.89 AT 150/89**

(43) Veröffentlichungstag der Anmeldung:
**01.08.90 Patentblatt 90/31**

(84) Benannte Vertragsstaaten:
**CH DE DK FR GB IT LI SE**

(71) Anmelder: **SGP-VA Energie- und Umwelttechnik Gesellschaft m.b.H.**
**Siemensstrasse 89**
**A-1210 Wien(AT)**

(72) Erfinder: **Fercher, Erich, Dipl.-Ing.**
**Matthaeusgasse 13/15**
**A-1030 Wien(AT)**
Erfinder: **Kahr, Gerhard, Dipl.-Ing., Dr.**
**Anzengruberstrasse 30**
**A-2542 Kottingbrunn(AT)**
Erfinder: **Zacek, Andreas**
**Murlingengasse 25/29**
**A-1120 Wien(AT)**

(74) Vertreter: **Collin, Hans, Dipl.-Ing. Dr. et al**
**Patentanwälte Dipl.-Ing. Dr. Hans Collin**
**Dipl.-Ing. Erwin Buresch Dipl.-Ing. Dr. Helmut**
**Wildhack Dipl.-Ing. Armin Häupl Mariahilfer**
**Strasse 50**
**A-1070 Wien(AT)**

(54) **Verfahren zum kombinierten Abbau von organischen Verbindungen und Entfernung von Hg, Pb und Cr aus staubförmigen Rückständen thermischer Entsorgungsprozesse.**

(57) Vorgeschlagen wird ein Verfahren zum kombinierten Abbau von organischen Verbindungen und Entfernung von Hg, Pb und Cr aus staubförmigen Rückständen thermischer Entsorgungsprozesse, insbesondere aus Flugaschen von Müllverbrennungsanlagen, bei denen Rückstände in einer oxidierten Atmosphäre erhitzt werden, vor allem mit dem Kennzeichen, daß die Rückstände einer nichtverschlackenden Erhitzung bei Temperaturen von über 250 °C, vorzugsweise bei 400-700 °C, unterworfen werden, wobei ein Teil der so behandelten Rückstände anfällt und in die Erhitzungszone zurückgeführt wird, sowie einerseits die dabei erhaltenen Abgase über Adsorbienten geleitet und anderseits die so behandelten Rückstände, insbesondere alkalisch, gelaugt werden.

EP 0 380 467 A2

# Verfahren zum kombinierten Abbau von organischen Verbindungen und Entfernung von Hg, Pb und Cr aus Staubförmigen Rückständen thermischer Entsorgungsprozesse

Die Erfindung betrifft ein Verfahren zum kombinierten Abbau von organischen Verbindungen und Entfernung von Hg, Pb und Cr aus Rückständen thermischer Entsorgungsprozesse, insbesondere aus Flugaschen von Müllverbrennungsanlagen, bei denen die Rückstände in einer oxidierenden Atmosphäre erhitzt werden.

Flugaschen, die seit geraumer Zeit in großen Mengen anfallen, stellen ein erhebliches Umweltproblem dar, da infolge ihrer Schadstoffracht eine Aufhaldung schwierig ist. Zum Unterschied von Flugaschen aus Kohlefeuerungen enthalten Flugaschen aus Müllverbrennungsanlagen eine große Menge Schadstoffe wie Schwermetalle, Dioxine, die in diesen Flugaschen auch durch Sekundärreaktionen neu gebildet werden können, sowie polycyklische Aromaten.

Die Müllverbrennungsflugaschen werden derzeit weltweit auf Deponien unter bestimmten Sicherheitsmaßnahmen, insbesondere Abdichtungsmaßnahmen, entsorgt. Hiebei kann die absolut sichere Entfernung bzw. Fernhaltung der Schadstoffe aus dem Ökosystem auf lange Sicht nicht garantiert werden. Daher wird eine Verminderung der Schadstoffe in den Flugaschen, d.h. eine Herabsetzung des Gefährdungspotentials, gefordert.

In diesem Zusammenhang ist bereits vorgeschlagen worden, die Müllverbrennungsflugaschen einem sauren Auslaugeverfahren zu unterziehen, um so mobile Schwermetalle wie Cd, Zn, Pb, Cu, Sb und Sn zu eliminieren; eine befriedigende Entfernung von Hg und Cr wurde dabei bis jetzt nicht erzielt.

Weiterhin wurde schon vorgeschlagen, den Hg-Gehalt von Müllverbrennungsflugaschen dadurch herabzusetzen, daß in einer eigenen Vorrichtung eine thermische Hg-Desorption bei über 300°C durchgeführt wird.

Zur Entfernung von Dioxinen aus Müllverbrennungsflugaschen ist bereits vorgeschlagen worden, die Flugaschen zu pelletisieren und die Pellets auf den Rost der Verbrennungsanlage rückzuführen, wo die Pellets aber teilweise verrieben werden und durch den Rost fallen, so daß auch nach Dioxinzerstörung kontaminiertes Flugaschenmaterial die relativ "saubere" Feuerungsschlacke verunreinigt.

Zur Dioxinzerstörung ist weiterhin schon die thermische Behandlung von Müllverbrennungsflugasche in einem von außen beheizten Schneckenförderer unter Inertgasatmosphäre vorgeschlagen worden.

Beim Verfahren zur thermischen Behandlung von Abfällen, insbesondere von Sonderabfällen gemäß der EP-A Veröffentlichungsnummer 0 300 396 wird der Abfall einer Verbrennungskammer zugeführt und unter Anfall von Schlacke, Abgas und Flugstaub verbrannt, wobei der mit dem Abgas herausgeführte Flugstaub anschließend abgetrennt wird. Damit wesentlich geringere Mengen an mit Schwermetallen kontaminiertem Flugstaub anfallen und die Möglichkeit eröffnet wird, die Schwermetalle wiederzugewinnen, wird der Flugstaub in eine Feinstaubfraktion und eine Grobstaubfraktion aufgeteilt und die Grobstaubfraktion in die Verbrennungskammer rückgeführt und in die flüssige Schlacke unter Verdampfung der anhaftendenm flüchtigen Schadstoffe eingebunden, während die an der Feinstaubfraktion anhaftenden Schadstoffe wiedergewonnen werden.

Diese Druckschrift hat im wesentlichen zum Ziel, Flugasche mit flüchtigen Schwermetallen anzureichern, um bei der nachfolgenden Gewinnung dieser Schwermetalle eine geringere Flugaschemenge aufarbeiten zu müssen. Dazu wird der Grobanteil der Flugasche in der Verbrennungskammer verflüssigt, was auf der anderen Seite einen hohen Energieeinsatz, hohe Abtragraten der Ausmauerung, $SO_2$ Abspaltung durch Zersetzung von $CaSO_4$ aus der Flugasche, keine Möglichkeit, die Alkalien und Erdalkalien durch saure Laugung zu nutzen (Schmelzpunkt der Flugasche würde gesteigert) und hohe CO-Emissionen nach sich zieht.

Zum Unterschied davon bestand im Vorliegenden die Aufgabe, ein Verfahren zu schaffen, das gestattet, insbesondere aus Müllverbrennungsflugaschen die oben erwähnten Schadstoffe, d.h. Dioxine, polycyklische Aromaten, Hg, Pb und Cr, möglichst gemeinsam soweit zu entfernen, daß ein gefahrlos deponierbares Endprodukt gebildet wird. Über die Entfernung von polycyklischen Aromaten ist derzeit nichts bekannt, obwohl diese Stoffe ebensol che Gefährlichkeit wie Dioxine aufweisen.

Zur Lösung dieser Aufgabe ist das erfindungsgemäße Verfahren zum kombinierten Abbau von organischen Verbindungen und Entfernung von Hg, Pb und Cr aus staubförmigen Rückständen thermischer Entsorgungsprozesse, insbesondere aus Flugaschen von Müllverbrennungsanlagen, bei denen die Rückstände in einer oxidierenden Atmosphäre erhitzt werden, vor allem dadurch gekennzeichnet, daß die Rückstände einer nichtverschlackenden Erhitzung bei Temperaturen von über 250°C, vorzugsweise bei 400-700°C, unterworfen werden, wobei ein Teil der so behandelten Rückstände als Flugasche anfällt und in die Erhitzungszone rückgeführt wird, sowie einerseits die dabei erhaltenen Abgase über Adsorbentien geleitet und anderseits die so behandelten Rückstände, insbesondere alkalisch, gelaugt werden.

Das erfindungsgemäße Verfahren verbindet somit in Kombination die Zerstörung der Dioxine und die Hg-Desorption und die Schwermetallaugung, wobei infolge der anfänglichen oxidierenden Behandlungsatmosphäre unter gewissen Bedingungen auslaugbare $Cr^6$-Verbindungen entstehen.

Dabei wird einerseits aus der Erhitzungszone gereinigte Asche ausgetragen, anderseits fällt auch Asche als Flugasche an, die in die Erhitzungszone rückgeführt wird. Die Zerstörung der Dioxine und polycyklischen Aromaten ist eine Frage der Temperatur und Verweilzeit in der Erhitzungszone; dabei zwar freigesetzte, aber möglicherweise nicht vollständig abgebaute Verbindungen werden von der Flugasche vollständig adsorbiert, sodaß die Flugascherückführung ein Abgasfilter darstellt.

Vorteilhafterweise werden als Adsorbentien für die Abgase regenerierbare Adsorbentien, insbesondere Aktivkohle, eingesetzt, deren Schadstoff-Beladung ab einem gewissen Beladungsgrad desorbiert und gewonnen wird, insbesondere das Hg. Als weitere Adsorbentien kommen z.B. sämtliche anderen aktiven Kohlenstoffprodukte bzw. Zeolithe, also in diesem Temperaturbereich beständige körnige Stoffe mit hoher spez. Oberfläche in Frage.

Bei der Adsorption des Hg tritt automatisch eine Anreicherung dieses Stoffes auf, so daß ab einer gewissen Konzentration des Hg am Adsorbermaterial die Erzielung eines hochkonzentrierten Desorbats möglich ist, aus dem das Hg auskondensiert werden kann.

Vorteilhaft werden die beladenen Adsorbentien mit Wasserdampf, insbesondere Heißdampf, gestrippt und der schadstoffbeladene Strippdampf insbesondere fraktioniert kondensiert. Das Kondensat besteht einerseits aus Wasser, das im wesentlichen keine oder nur Spuren löslicher Hg-Verbindungen enthält, sowie anderseits aus metallischem Hg und HgCl. Der Wasseranteil des Kondensats kann gegebenenfalls rückgeführt werden, indem Rückstände vor der erfindungsgemäßen Behandlung mit diesem Wasser getränkt werden.

Nach der oxidierenden Behandlung werden die Rückstände zur Eluierung von Schwermetallsalzen insbesondere alkalisch gelaugt, wobei vorteilhaft eine Sodalösung und/oder Natronlauge eingesetzt wird.

Die oxidierende Behandlung der Rückstände erfolgt günstig in einem Drehrohrofen; sie kann aber auch z.B. in einer Wirbelschicht oder einem Etagenofen mit Kratzarmen erfolgen.

Als staubförmige Rückstände werden vor allem Flugaschen aus Müllverbrennungsanlagen eingesetzt. Vor der erfindungsgemäßen Behandlung kann die Flugasche auch, wie eingangs erwähnt, durch saure Laugung vorbehandelt werden, wobei dabei Cd, Sn, Pb, Zn, Cu, Ni und vor allem Ca entfernt wird.

Als weiteres Beispiel werden Aschen von Gerbereischlämmen genannt; grundsätzlich können vorteilhaft alle staubförmigen Verbrennungsrückstände von Sonderabfällen eingesetzt werden.

Die Auswahl der Adsorbentien für das Abgas bzw. der Stripper für die Adsorbentien erfolgt in Abhängigkeit von den Betriebsparametern, hauptsächlich vom Temperaturbereich, in dem adsorbiert bzw. desorbiert werden soll.

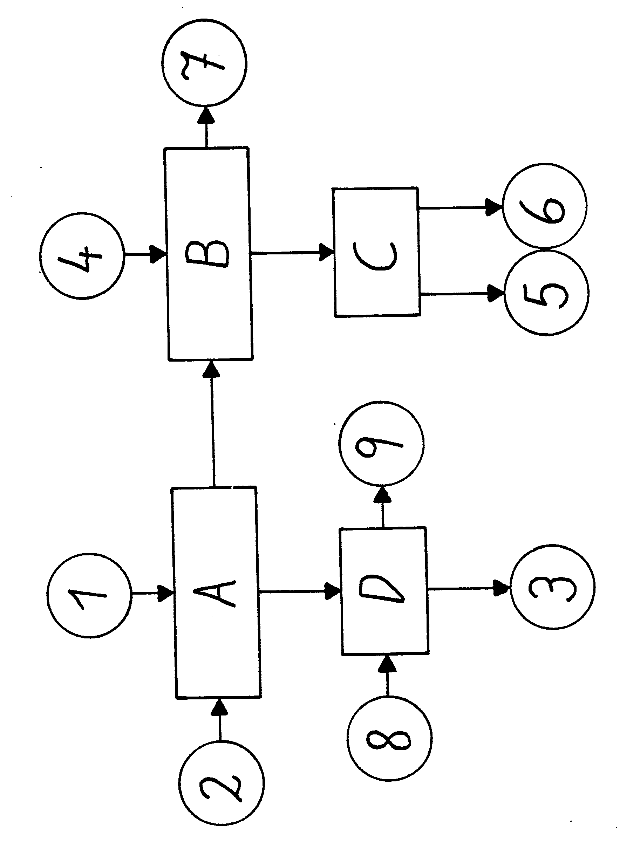

Das erfindungsgemäße Verfahren wird im folgenden anhand eines Ausführungsbeispiels unter Bezugnahme auf die Zeichnung näher beschrieben, die ein Blockschema des erfindungsgemäßen Verfahrens darstellt.

Eine Flugasche (1) aus einer Müllverbrennunganlage wird in einem Drehrohrofen (A) mit direkter Befeuerung bei 500-700 C und einer Verweilzeit bis 120 min (abhängig von den spezifischen Eigenschaften des Gutes) thermisch behandelt. Hierbei werden organische zu $CO_2$ und Wasser verbrannt. Die abziehenden Abgase werden mindestens 3 Sekunden auf bis maximal 900 C gehalten, um restliche organische Verbindungen, insbesondere Dibenzoparadioxine und -furane, im Abgas zu oxidieren. Anschließend werden die Abgase auf eine Temperatur kleiner 200 C, idealerweise kleiner 150 C abgekühlt und mindestens 1/2 Sekunde vor der Abscheidung der Staubteilchen am Staubfilter auf dieser Temperatur gehalten. Dadurch werden noch unzerstörte Dioxine aus der Gasphase am Staub adsorbiert. Idealerweise soll hier der Staubgehalt im Abgas möglichst hoch sein. Der Staub wird möglichst vollständig an einem Schlauchfilter bei Temperaturen von 60 bis 150 C abgeschieden. Dioxine und Furane werden hiermit selektiv vom Abgas und dem Hg abgetrennt. Von der Flugasche desorbiertes Hg, welches nun in metallischer Form vorliegt, wird von der thermisch behandelten Flugasche nur zu einem geringen Teil adsorbiert und wird erst im nachgeschalteten Aktivkohlefilter (B) adsorbiert. Nach Erreichen eines gewissen Beladungszustandes des Adsorbers kann dieser mit Wasserdampf (4) bei Temperaturen zwischen 120 und 300 C fraktioniert desorbiert werden.

Hg wird mittels einer Umlenkschikane (C) bei Temperaturen über dem Kondensationspunkt des Wasserdampfes als metallisches Hg oder Hg-Salz (5) kondensiert. Der Wasserdampf (6) wird anschließend kondensiert.

Infolge der thermischen Behandlung (A) in oxidierender Atmosphäre verliert die Flugasche (1) ihre reduzierenden Eigenschaften, $Cr_3$ an der Flugaschenoberfläche wird zu $Cr_6$ oxidiert. Der bei einer Wasserwäsche der aus der Erhitzungszone ausgetragenen, abgekühlten Flugasche erhaltene Extrakt enthielt $Na_2SO_4$ in größerer Menge, sowie $Cr_6$ und $Pb_4$ Verbindungen; somit wird $Cr_6$ und $Pb_4$ in diesem Schritt eluiert. Dabei wird auch alkalisch lösliches Ca in $CaCO_3$ umgewandelt, so daß der Ca-Gehalt im Extrakt herabgesetzt wird. Aus dem Extrakt wird mittele $Fe(II)SO_4$ das Cr und da Pb jeweils als Hydroxid gefällt. Anschließend kann der Extrakt in der Rauchgaswäsche eingesetzt werden, um Alkalien zu sparen.

Bei geringeren Cr-Gehalten an der Flugasche kann statt der $Na_2CO_3$ Lösung direkt mit $Fe(II)SO_4$-Lösung gewaschen werden. $Cr_6$ und $Pb_4$ werden dadurch direkt an der Flugasche reduziert und infolge der Alkalität der Flugaschen direkt an diesen abgeschieden.

Es wurden 180 kg Flugasche pro Stunde durchgesetzt. Dabei ergab sich folgende Dioxinbilanz in mg/h Betriebszeit.

|  | Ausgangsflugasche | behandelte Flugasche 90% | Schlauchfilter 10% | Aktivkohlefilter |
|---|---|---|---|---|
| PCDD | 150 | < 0.4 | 8 | 0.4 - 1 |
| PCDF | 50 | 1.5 | 4 | 0.2 - 2 |
| TE | 2 | < 0.02 | 0.11 | 0.005 - 0.03 |

Die Ausbeute an behandelter Flugasche beträgt etwa 90 %. Der restliche Teil (etwa 10 %) wird durch ein Schlauchfilter abgeschieden und rückgeführt. Die Effizienz der Dioxinzerstörung dieses Verfahrens beträgt, gemessen an der Verringerung des Toxizitätsäquivalentes, 99 %.

Die ermittelte Hg-Bilanz ist wie folgt:

|  | Ausgangs-Flugasche | behandelte Flugasche | Schlauchfilter | Aktivkohlefilter |
|---|---|---|---|---|
| Hg (mg/h) | 2000 | < 40 | 200 | 1800 |

Es werden mehr als 98 % der Gesamtquecksilbermenge desorbiert und mit hoher Ausbeute an Aktivkohle adsorbiert. Üblicherweise werden dazu speziell dotierte Aktivkohlen (S-dotiert, J-dotiert) verwendet. Insbesondere bei Kombination des erfindungsgemäßen Verfahrens mit einer Müllverbrennungsanlage mit zweistufiger nasser Rauchgaswäsche kann aber auch herkömmliche Aktivkohle, welche billiger und einfacher zu regenerieren ist, verwendet werden, weil der Abgasstrom in den Feuerraum rückgeführt werden kann.

Ebenso wie "Dioxine", d.h. polychlorierte Dibenzodioxine und -furane werden alle anderen organischen Verbindungen an der Flugasche durch das erfindungsgemäße Verfahren entfernt.

Oberflächlich anhaftendes Cr wird während der thermischen Behandlung durch den Luftsauerstoff zu $Cr_6$ oxidiert, welches anschließend mit etwa 2,5 %-iger $Na_2CO_3$-Lösung ausgewaschen wurde. Es ergab sich folgende Eluatanalyse (nach DEV-S4) des Endproduktes:

| pH | 10.2 |
|---|---|
| Leitfähigkeit | 2.4 mS/cm |
| Kohlenwasserstoffe | 1.0 mg/l |
| Pb | 0.5 mg/l |
| Cd | 0.05 mg/l |
| Cr | 0.1 mg/l |
| Cu | 0.1 mg/l |
| Ni | 0.1 mg/l |
| Hg | 0.005 mg/l |
| Zn | 0.5 mg/l |

**Ansprüche**

1. Verfahren zum kombinierten Abbau von organischen Verbindungen und Entfernung von Hg, Pb und Cr aus staubförmigen Rückständen thermischer Entsorgungsprozesse, insbesondere aus Flugaschen von Müllverbrennungsanlagen, bei denen die Rückstände in einer oxidierenden Atmosphäre erhitzt werden, dadurch gekennzeichnet, daß die Rückstände einer nichtverschlackenden Erhitzung bei Temperaturen von über 250°C, vorzugsweise bei 400-700°C, unterworfen werden, wobei ein Teil der so behandelten Rückstände als Flugasche anfällt und in die Erhitzungszone rückgeführt wird, sowie einerseits die dabei erhaltenen Abgase über Adsorbentien geleitet und anderseits die so behandelten Rückstände, insbesondere alkalisch, gelaugt werden.

2. Verfahren nach Anspruch 1, dadurch gekennzeichnet; daß als Adsorbentien regenerierbare Adsarbentien, insbesondere Aktivkohle, eingesetzt werden.

3. Verfahren nach Anspruch 2, dadurch gekennzeichnet, daß die Adsorbentien mit Wasserdampf, insbesondere Heißdampf, regeneriert werden, wobei der dabei beladene Wasserdampf insbesondere fraktioniert kondensiert wird.

4. Verfahren nach einem der Ansprüche 1 bis 3, dadurch gekennzeichnet, daß die so behandelten Rückstände mit einer Sodalösung und/oder mit Natronlauge gelaugt werden.

5. Verfahren nach einem der Ansprüche 1 bis 4, dadurch gekennzeichnet, daß die Rückstände der oxidierenden Atmosphäre in einem, insbesondere direkt befeuerten, Drehrohr ausgesetzt werden.

EP 0 380 467 A2